# EUROPEAN PATENT SPECIFICATION

(11) **EP 2 557 272 B1**
(45) Date of publication and mention of the grant of the patent: **24.12.2014**
(21) Application number: 12177099.4
(22) Date of filing: 19.07.2012
(51) Int. Cl.: F01D 5/30

(54) **Rotor stage for a gas turbine engine and corresponding method of separating oil from an internal flow**
Rotorstufe eines Gasturbinentriebwerks und zugehöriges Verfahren zur Oelabscheidung aus einer internen Strömung
Etage rotorique de moteur à turbine à gaz et procédé associé de séparation d'huile d'un flux interne

(30) Priority: 12.08.2011 GB 201113893
(43) Date of publication of application: 13.02.2013
(73) Proprietor: Rolls-Royce plc, London SW1E 6AT (GB)
(72) Inventor: Burt, Alexander, Bristol, BS9 3PZ (GB); Sadler, Keith, Bristol, BS7 9LJ (GB)
(74) Representative: Hill, Matthew Ross

(56) References cited:
- EP-A1- 0 144 842
- EP-A2- 1 772 592
- GB-A- 1 209 419
- US-A1- 2010 158 686
- US-A1- 2011 194 944

## Description

The present invention relates to separation of oil from flow through a gas turbine engine. In particular, the present invention is at least in part concerned with separation of oil mist from secondary flows through a gas turbine engine, for example from internal flow through a rotor stage.

A gas turbine engine typically has a working fluid, or working gas, that passes through the engine to generate power. The working fluid may refer to the core flow from which the turbine extracts work, after the core flow has been compressed in the compressor and combusted in the combustor.

In addition to the working fluid, or core flow, a gas turbine engine typically has a secondary air system (SAS) flow, which may also be referred to as an internal flow. In contrast to the working fluid, the SAS is not generally used to generate power in the gas turbine engine. Instead, the SAS is used for auxiliary purposes, such as for providing cooling to and/or sealing to and/or between various components of the gas turbine engine.

The SAS is therefore designed to provide air (i.e. gas) that has not passed through the combustor to various components of the gas turbine engine. However, for various reasons, liquid can become entrained in the air in the SAS. For example, lubricants, such as oil, may become entrained in the air, for example in the form of a mist. The liquid may be from many different sources. For example some oil may become entrained in the SAS during its use as a lubricant.

The presence of any liquid in the SAS may be undesirable. For example, the SAS is typically used in applications that require a gas, rather than a mixture of gas and liquid. Purely by way of example, if the SAS is designed for use in an air seal, air bearing, or in air cooling passages, the presence of any liquid may cause the seal, bearing, or cooling passage to cease to operate in the intended manner, for example by becoming at least partially blocked.

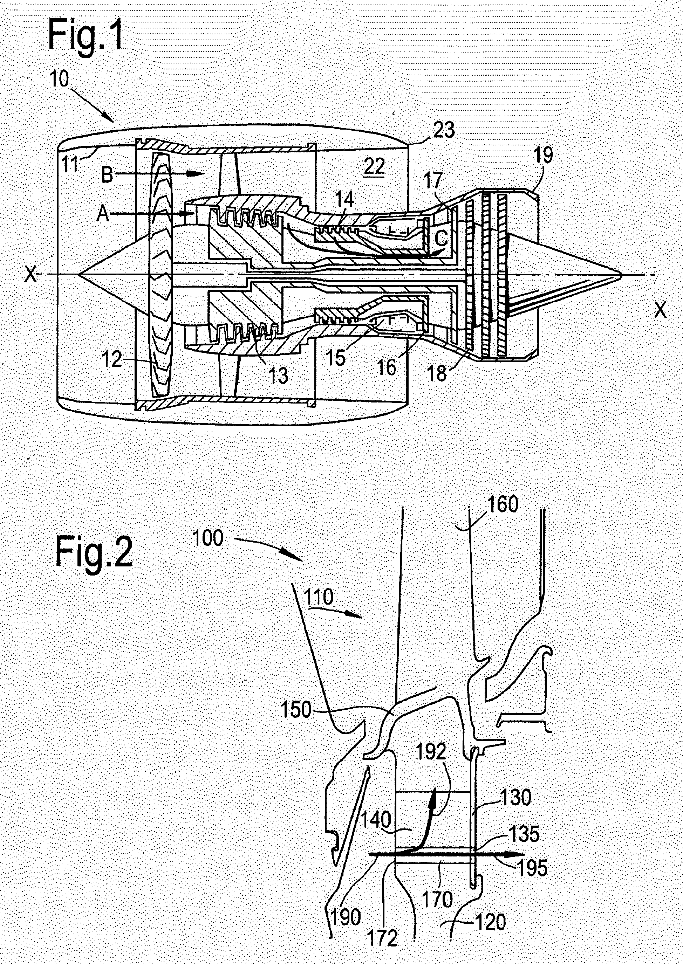

An example of a component in which SAS air may be used in a gas turbine engine is in a rotor stage. The SAS air may have a number of different uses in a rotor stage, for example in blade cooling and rim sealing (for example between neighbouring rotor and stator stages). In a rotor stage such as the rotor stage 100 shown in Fig. 2, SAS fluid 190 passes into the rotor stage 100 and flows axially through a flow passage, which may be referred to as a bucket groove, 170 formed between the rotor blade 110 and the rotor disc 120. At least a portion 195 of the SAS fluid flows directly through the bucket groove 170 and out of the rotor stage 100 through a hole 135 in a lock plate 130. The lock plate 130 may be configured to lock the rotor disc 120 and the rotor blade 110 together, for example axially. The document EP0144842 shows an example of a turbine stage comprising a lock plate with a metering hole.

The hole 135 in the lock plate 130 may typically be aligned with the bucket groove 170. As such, fluid flowing through the bucket groove 170 may exit (to the downstream side) the rotor stage 100 without obstruction. Thus, any unwanted liquid that is in the SAS is also able to pass straight through the bucket groove 170 in the rotor stage 100 to the downstream side. This SAS fluid containing the unwanted liquid (for example oil) may then be used in applications designed to be supplied with SAS air (i.e. gas), which may lead to, for example, degradation in performance and/or reduced component life.

It is therefore desirable to provide SAS fluid that is free from liquid, such as oil. It has been identified that if any liquid in the SAS fluid can be removed as it passes through the rotor stage, then downstream components may be provided with SAS gas i.e. without any unwanted liquid, such as oil.

According to the invention, there is provided a rotor disc, rotor blades, and a locking plate for a rotor stage of a gas turbine engine. The rotor disc has a plurality of radially extending disc posts. Each rotor blade comprises an attachment portion configured to attach the rotor blade to the rotor disc. The attachment portion engages with (or is attached to) circumferentially neighbouring disc posts of the rotor disc. Each rotor blade comprises a platform from which an aerofoil extends. Each rotor blade comprises a shank extending between the attachment portion and the platform. The shank may be a radially extending shank. At least a portion of the sealing plate may be positioned radially inward of the platform. The sealing plate is positioned axially downstream of the disc posts and attachment portion. The sealing plate is configured to allow, in use, internal flow to pass through a shank passage formed by the shanks of two neighbouring rotor blades, a radially outer surface of a disc post, and a radially inner surface of the platform. The radially inner surface of the platform may be formed by radially inner surfaces of the respective platforms of the two neighbouring blades. In use, any oil passing through the shank passage may be centrifuged towards the platform and thereby separated from the rest of the internal flow.

The sealing plate comprises at least one shank flow opening configured to allow internal flow from the shank passage to pass through the sealing plate. This may allow the internal flow to pass to a downstream side of the rotor stage. The axis of the opening may be substantially aligned with the axial direction (i.e. the rotation axis) of the rotor stage, such that the internal flow exits through the or each shank flow opening in a substantially axial direction.

The or each shank flow opening in the sealing plate may be offset from the shank passage, for example radially offset. This may create a tortuous flow path between the shank passage and the shank flow opening.

The tortuous flow path may require the internal flow to substantially change direction at least once as it passes from the shank passage to the shank flow opening. The tortuous flow path may enhance the separation of the oil from the internal flow. For example, the tortuous flow path may increase the distance travelled by the internal flow before it reaches the shank flow opening. The increase in distance travelled by the internal flow as a result of the tortuous flow path means that the internal flow is subject to the centripetal acceleration, and thus the centripetal separation, for an increased period of time. Additionally or alternatively, the tortuous flow path may generate flow losses (for example total pressure losses) in the passage of the internal flow, thereby reducing the velocity (for example axial velocity) of the internal flow as it passes through the shank passage, allowing more time for the centripetal separation of the oil.

The or each shank flow opening may be radially inboard of the shank passage. This may mean that the internal flow must turn from a substantially axial direction (through the shank flow passage) to a substantially radially inward direction, and then back to a substantially axial direction as it passes through a shank flow opening. This may be a convenient and effective arrangement for forming a tortuous path.

The internal flow may be referred to as the secondary air system flow (SAS flow). The internal flow may be flow that is not a working fluid. The internal flow may be flow that is bled from the compressor before passing through the combustor, i.e. it may be flow that bypasses the combustor. The internal flow may be flow that enters the rotor stage radially inboard of the platform.

The sealing plate may additionally function as a lock plate (or retaining plate). As such, the sealing plate may ensure that there is no motion between the rotor blades and the rotor disc, i.e. that the rotor blades are locked to the rotor disc, for example in an axial direction.

A rotor stage (which may be, for example, a turbine rotor stage or a compressor rotor stage) arranged as described above may allow oil, such as oil mist (or indeed any liquid, such as any lubricant), to be separated from the internal flow as the internal flow passes through the rotor stage. The oil separation may occur as the internal flow passes through the shank passage. In use (i.e. during rotation of the rotor stage, for example when the gas turbine engine is being operated), the fluid in the shank passage (which may be arranged substantially axially) experiences a centripetal acceleration due to rotation of the blade stage about the axial centreline of the engine. Because the oil has greater density than the gas, the oil (or oil particles) prescribe a greater radius than the gas particles, and are thus centrifuged from the gas. Thus, any unwanted oil, or substantially any oil, that is contained in the internal flow when it enters the shank passage may be removed from the internal flow before it leaves the shank passage, such that substantially no liquid (such as oil) is contained in the internal flow passing out of the rotor stage.

The sealing plate may comprise a plurality of shank flow openings, each shank flow opening being configured to allow flow from one or more shank passage to pass therethrough. For example, the rotor stage may have one shank flow opening per blade, and/or one shank flow opening per shank passage. Alternatively, there may be more than one shank flow opening per shank passage or less than one shank flow opening per shank passage. For example, the sealing plate may comprise at least as many shank flow openings as the number of disc blades in the rotor stage, for example twice as many, three times as many, four times as many, or more than four times as many. In some embodiments, the shank flow opening may be one or more slots, for example one or more circumferentially extending slots.

The sealing plate may be a circumferential sealing plate. The circumferential sealing plate may extend circumferentially at the downstream side of the rotor stage. The sealing plate may comprise a plurality of sealing plate segments. The sealing plate may be a sealing plate segment. A plurality of sealing plate segments may together form a sealing plate, such as a circumferential sealing plate. Each sealing plate segment may correspond to an individual disc blade and/or to an individual shank passage. Alternatively, each sealing plate segment may correspond to more than one (for example two, three, four, five, six, seven, eight, nine, ten, or more than ten) disc blade and/or to more than one (for example two, three, four, five, six, seven, eight, nine, ten, or more than ten) shank passage. The term sealing plate may, for example, refer to each sealing plate segment, to a plurality of sealing plate segments, or to a complete circumferential sealing plate.

The one or more shank flow opening or openings may be the only openings provided in the sealing plate. As such, the only flow that passes through the sealing plate may be from the shank passage. This may help to ensure that the internal flow that passes through the rotor stage contains no liquid, such as oil, or at least less liquid than the internal flow entering the rotor stage.

The rotor stage may further comprise a platform opening. The platform opening may be configured to allow separated oil to pass therethrough. As such, the platform opening may allow the separated oil to pass to the other side of the platform, for example into a working gas of the gas turbine engine. The platform opening may be provided in the platform itself. Additionally or alternatively, the platform opening may be provided between platforms of adjacent rotor blades. The platform opening may be a gap between adjacent platforms. Such a gap may result from, for example, an imperfect seal between the platforms and/or a seal or gap designed to allow such leakage. Oil that has been separated from the internal flow may pass through such a gap.

The number of platform openings may be the same as the number of rotor blades. As such, each shank passage may have one or more corresponding platform opening. The oil separated from the internal flow in one shank passage may be exhausted (or fed) into the working flow through the corresponding platform opening.

Each rotor blade may further comprise a cooling flow inlet. The cooling flow inlet may be formed on a radially inner surface of the attachment portion. The cooling flow inlet may be configured to allow cooling flow to enter into the blade. A cooling flow supply passage may be formed between the radially inner surface of the attachment portion and the rotor disc. For example, the cooling flow supply passage may be formed between neighbouring rotor disc posts, the radially outer surface of the rotor disc from which the disc posts extend, and the radially inner side of the attachment portion. The downstream end of the cooling flow supply passage may be blocked by the sealing plate. Thus, in use, substantially all of the fluid that passes through the cooling flow supply passage may enter the cooling flow inlet. According to this arrangement, cooling flow to cool internal flow passages of the blade may be supplied separately to the internal flow that passes through the shank passage. Thus, the flow that passes to the downstream side of the rotor stage may be separate from the flow that is used for internal cooling of the rotor blades at entry to the rotor stage.

According to the invention, there is provided a method of separating oil from an internal flow through a rotor stage of a gas turbine engine. The rotor stage comprises a rotor disc having a plurality of radially extending disc posts, and a plurality of rotor blades. Each rotor blade comprises: an attachment portion configured to engage with circumferentially neighbouring disc posts to attach the rotor blade to the rotor disc; a platform from which an aerofoil extends; and a shank extending from the attachment portion to the platform. The method comprises passing the internal flow through a shank passage. The shank passage is formed by the shanks of two neighbouring rotor blades, a radially outer surface of a disc post, and a radially inner surface of the platform. The method comprises rotating the rotor stage so as to separate the oil from the rest of the internal flow. The separation is through centripetal action within the shank passage.

The rotation of the rotor stage may be through normal use of the gas turbine engine in which the rotor stage is installed. Thus, in the case of the rotor stage being a turbine rotor stage, the force provided to rotate the rotor stage, and thus separate the oil, may be provided by the working fluid, which has passed through the combustor, acting on the aerodynamic surfaces of the rotor blades. In the case that the rotor stage is a compressor stage, the force provided to rotate the rotor stage may be provided by a shaft driven by a corresponding turbine.

According to such a method, oil may be separated from an internal flow through a rotor stage of a gas turbine engine. This means that any oil in the internal flow upstream of the rotor stage can be separated, and optionally removed, before the internal flow passes to the downstream side of the rotor stage.

The method may further comprise passing the separated oil through gaps in the platform or between neighbouring platforms. Thus, the separated oil may be passed into a working fluid of the gas turbine engine.

The gaps may be referred to as platform openings. The gaps may be dedicated gaps, or holes designed in or between the platforms. Alternatively or additionally, the gaps may be formed between the platforms by, for example, imperfect seals between the platforms.

This may allow any liquid, such as oil (which may be in the form of oil mist), to be removed from the internal flow before the internal flow passes downstream, for example for use in cooling and/or sealing downstream components. It may be desirable to remove liquid from the internal flow from a safety and/or efficiency perspective, for example to prevent build-up/collection of excess unwanted liquid in the engine.

The method may further comprise passing the internal flow from which the oil has been separated out of the rotor stage through a tortuous path. For example, the internal flow may be passed out of the rotor stage through one or more openings in the sealing plate. The openings may be fluidly connected to, and offset from (for example radially offset from) the shank passage to create the tortuous path. Creating a tortuous path for the internal flow, for example as it passes out of the shank passage, may result in improved separation of the liquid in the shank passage.

It will be appreciated that where reference is made herein to oil (for example separating oil from an internal flow), the more general term liquid could be used (for example separating liquid from an internal flow), because the method and apparatus described herein could be used to separate any liquid from an internal flow, including, but not limited to, oil.

Embodiments of the invention will now be described by way of example only, with reference to the accompanying diagrammatic drawings, in which:
Figure 1 is a sectional side view of a gas turbine engine;
Figure 2 is a schematic cross-section through a turbine rotor stage;
Figure 3 is a schematic cross-section through a turbine rotor stage according to an embodiment;
Figure 4 is a schematic view of a sealing plate for use in an embodiment;
Figure 5 is a cross section through the line BT-BT of the sealing plate shown in Figure 4; and
Figure 6 is a schematic isometric view of part of a rotor stage according to an embodiment, include a rotor disc, a rotor blade, and a sealing plate.

With reference to Figure 1, a ducted fan gas turbine engine generally indicated at 10 has a principal and rotational axis X-X. The direction X-X may be referred to as the axial direction of the engine. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 12, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

As the air passes through the gas turbine engine 10 it is heated to high temperatures. In particular, the first airflow A reaches high temperatures as it passes through the core of the engine. Typically, particularly high temperatures may be reached at the exit of the combustion equipment 15, and as the air subsequently passes through the high, intermediate and low-pressure turbines 16, 17, 18.

In addition to the first airflow A and the second airflow B, a typical gas turbine engine 10 may also have a secondary air system flow (SAS flow), indicated by arrow C in Figure 1. The SAS flow may be referred to as an internal flow or a secondary flow. In contrast to the first airflow A and the second airflow B, the internal flow C is not directly used to generate thrust or power. Instead, the internal flow C is used to provide flow for other applications in the engine 10. By way of example only, the internal flow C may be used for cooling (for example of turbine components, such as blades and/or vanes and/or shrouds), sealing (for example of rim seals between rotor and stator stages), and/or ventilation (for example of a disc cavity).

The internal flow C may be supplied from any suitable source. For example, the internal flow C may be bled from an intermediate pressure compressor and/or a high pressure compressor. The internal flow C may be bled from one or more than one location. In the schematic example shown in Figure 1, the internal flow C is bled from two different locations. A gas turbine engine may have a plurality of different internal flows C, at least some of which may remain separate from each other in use.

Internal flow may be used for at least one purpose in and/or around a rotor stage of a gas turbine engine. The rotor stage may be a compressor rotor stage or a turbine rotor stage, for example. Thus, any description herein relating to either a compressor rotor stage or a turbine rotor stage may apply to either or both a compressor and/or turbine rotor stage.

An example of part of a turbine rotor stage 100 is shown in Figure 2. The rotor stage 100 has a rotor blade 110. The rotor blade 110 has a platform 150 from which an aerofoil 160 (partially shown) extends. The rotor stage 100 also comprises a rotor disc 120. The rotor blade 110 has an attachment portion 140 that attaches the rotor blade 110 to the rotor disc 120. A locking plate, or retaining plate, 130 is provided to lock the rotor blade 110 to the rotor disc 120, for example to prevent the two components becoming axially separated. The lock plate 130 may be located in corresponding radially offset circumferential grooves in the rotor disc 120 and in the rotor blade 110. As explained above, an internal flow passage 170 (which may be referred to as a bucket groove 170) is formed between the rotor blade 110 and the rotor disc 120. The internal flow passage 170 extends in a substantially axial direction.

In use, internal flow (also referred to as secondary air system, or SAS, flow) 190 enters the bucket groove 170 through an inlet 172. A portion 192 of the internal flow 190 may be directed into interior passages in the aerofoil 160 to provide cooling, for example effusion cooling. Another portion 195 of the internal flow 190 passes directly through the passage 170 to the downstream side of the rotor stage 100 through an aperture 135 in the lock plate 130. The flow portion 195 that exits to the downstream side of the rotor stage 100 may be used for other purposes downstream of the rotor stage 100, for example as a sealing and/or cooling flow.

In Figure 2, the aperture 135 in the lock plate 130 is aligned with the internal flow passage 170. As such there is a direct axial path, commonly referred to as a line-of-sight path, for the internal flow 190 to pass directly through the bucket groove 170 to the downstream side of the rotor stage 100. As such, the composition of the internal flow 190 that enters the rotor stage 100 through the inlet 172 may remain substantially unchanged as it passes axially through the bucket groove 170 and out through the aperture 135 in the lock plate 130. Thus, any liquid, such as oil, in the internal flow 190 may pass through the rotor stage 100 to the downstream side.

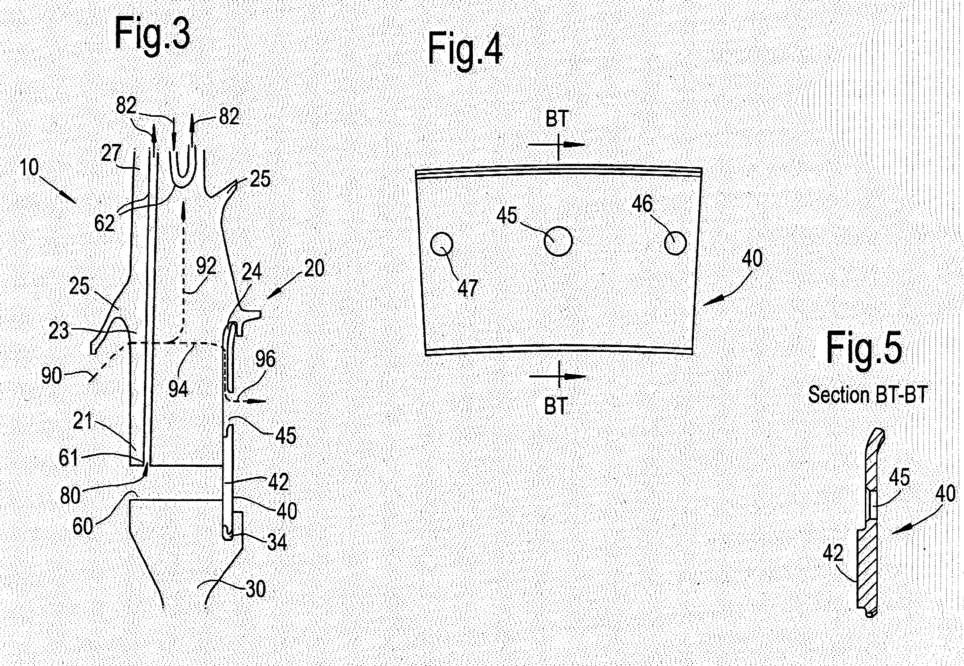

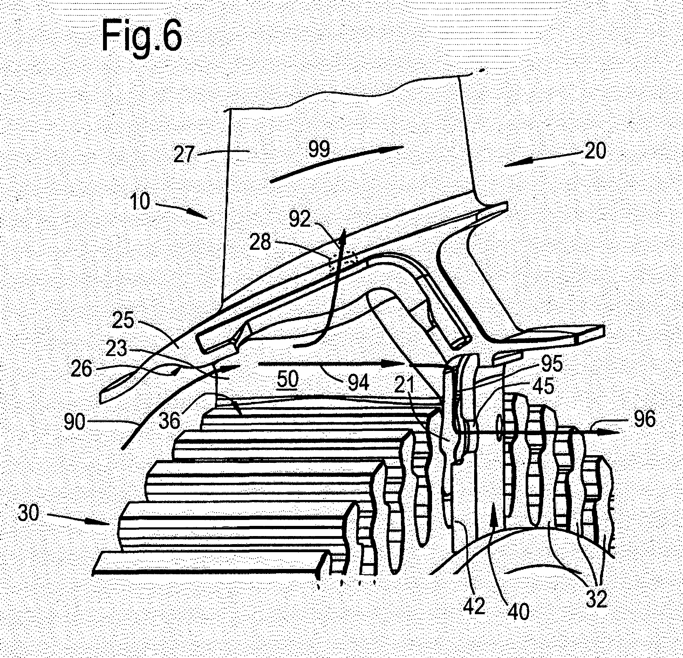

Figure 3 shows an alternative rotor stage 10 in cross section. Figure 6 shows the rotor stage 10 in a partially cut-away perspective view. Description of the rotor stage 10 will be best understood through reference to both Figure 3 and Figure 6, and corresponding features in Figures 3 and 6 are given the same reference numerals.

The rotor stage 10 of Figures 3 and 6 has at least one rotor blade 20, a rotor disc 30 and a sealing plate 40. The rotor blade 20 has an aerofoil portion 27 (partially shown) extending from a platform 25. In use, the aerofoil portion 27 is gas washed by the working fluid, as is the radially outer surface of the platform 25.

The rotor blade 20 comprises an attachment portion 21, and a shank 23. In the embodiment of Figures 3 and 6, the shank 23 extends radially from the attachment portion 21 to the platform 25, in particular to the radially inner surface of the platform 26.

The rotor disc 30 comprises a plurality of disc posts 32. Each disc post 32 extends radially from the rotor disc 30. The number of disc posts 32 may depend on the rotor stage 10, for example whether the rotor stage 10 is a high pressure, intermediate pressure, or low pressure stage, and what type of engine the rotor stage 10 belongs to. The number of disc posts 32 may correspond to (for example be the same as) the number of rotor blades 20 in the rotor stage 10.

Each rotor blade 20 may be attached to the rotor disc 30 via engagement with one or more disc posts 32. The attachment portion 21 of the rotor blade 20 may have a fir tree configuration, as in the Figure 6 embodiment. Other attachment portion configurations may be used, such as a dovetail arrangement. As best seen in Figure 6, the attachment portion 21 of each rotor blade 20 may engage with corresponding disc posts. For example, the attachment portion 21 may engage with two corresponding, circumferentially adjacent disc posts 32. In this way, the rotor blade 20 is attached to the rotor disc 30, in particular so as to resist detaching from the rotor disc 30 in a radial direction as a result of centripetal loading during rotation.

In Figure 6, only one rotor blade 20 is shown attached to the rotor disc 30. However, it will be appreciated that in use, a plurality of rotor blades 20 are attached to the rotor disc 30, with a rotor blade 20 being attached in the space between each neighbouring pair of disc posts 32 in the manner described herein. Also in Figure 6, the sealing plate 40 and the rotor blade 20 are both shown partially cut-away in a plane extending in the axial-radial directions (relative to a conventional engine axis system). In particular, the rotor blade 20 is shown with an axial-radial plane cut through the platform 25. The sealing plate 40 is shown with an axial-radial plane cut through a shank flow opening 45 (described below).

The sealing plate 40 is located at the downstream side of the rotor stage 10. The sealing plate 40 in the Figure 6 embodiment is located at an inner radius in a circumferential groove 34 formed in the rotor disc 30. The sealing plate 40 in the Figure 6 embodiment is located at an outer radius in a circumferential groove 24 formed in the rotor blade 20. The sealing plate 40 in the Figure 6 embodiment acts to lock, or retain, the rotor disc 30 relative to the rotor blade 20 and vice versa. For example, the sealing plate may prevent or limit relative axial movement between the rotor disc 30 and the rotor blade(s) 20. As such, the sealing plate 40 may be referred to as a lock plate or retaining plate. In some embodiments, the sealing plate may not also have a locking or retaining function. In such embodiments, the rotor stage 10 may have an additional or alternative locking or retaining mechanism, for example to prevent or limit relative axial movement between the rotor disc 30 and the rotor blade(s) 20.

The sealing plate 40 is shown in greater detail in Figures 4 and 5. The sealing plate 40 shown in Figures 4 and 5 forms a circumferential segment that sits between the circumferential groove 34 formed in the rotor disc 30 and the circumferential groove 24 formed in the rotor blade 20. The sealing plate 40 shown in Figures 4 and 5 may thus be referred to as a sealing plate segment 40. In the Figure 6 embodiment, a plurality of sealing plate segments 40 may be provided to extend around the entire circumference of the stage, between the circumferential groove 34 formed in the rotor disc 30 and the circumferential groove 24 formed in the rotor blade 20. The sealing plate or sealing plate segment 40 may extend through any suitable circumferential extent. For example, each sealing plate 40 may correspond to (i.e extend circumferentially and downstream of) 1, 2, 3, 4, 5, 6, 7, 8, 9, 10, or more than 10 rotor blades 20. In the Figure 6 embodiment, by way of example only, there is a 1:1 relationship between the number of rotor blades 20 and the number of sealing plates 40. In other embodiments, for example, the sealing plate 40 may be a single, circumferentially extending sealing plate 40 that extends around the entire circumference downstream of the rotor blades 20 and rotor disc 30.

The sealing plate 40 has a shank flow opening 45 formed therein. There may be more than one shank flow opening. For example, there may be more than one shank flow opening per rotor blade 20. By way of example only, in the Figure 4 embodiment, the sealing plate (which in this embodiment corresponds to a single rotor blade 20) has three shank flow openings 45, 46, 47. As described below, the shank flow opening(s) 45 allow internal flow (or SAS flow) 90 to pass through the rotor stage 10, from the upstream side to the downstream side.

In use, internal flow 90 from the upstream side of the rotor blade 10 passes into a shank passage 50. The shank passage 50 is formed between, or bound by, a radially outer surface 36 of a disc post 32, a radially inner surface 26 of the platform 25 (or radially inner surfaces 26 of neighbouring platforms 25), and outer surfaces of shanks 23 of neighbouring rotor blades 20. As such, in the Figure 3 embodiment, the rotor stage 10, when fully assembled, has the same number of rotor blades 20 and shank passages 50.

As mentioned herein, the internal flow 90 may be intended to be gaseous. At least, it may be intended not to contain any liquid droplets, such as oil mist. This may be for safety and/or efficiency and/or wear considerations, for example in relation to components downstream of the rotor stage 10. In use, the internal flow 90 passing into the shank passage 50 experiences a centripetal acceleration due to the rotation of the rotor stage 10. Any liquid, such as oil, that is in the internal flow 90 prescribes a greater radius due to the centripetal acceleration than the gas. As such, any oil in the internal flow 90 moves through the shank flow passage 50 in a direction that has a radially outward component. A possible direction of travel of oil droplets, for example in oil mist, as the internal flow 90 travels through the shank passage 50 is shown by arrow 92 in Figures 3 and 6. It will be appreciated that the arrow 92 is for illustrative purposes, and may not represent the precise path of the oil droplets.

Oil in the internal flow 90 therefore moves towards the radially inner surface (or underside) 26 of the platform 25. As such, any oil (or other liquid) in the internal flow 90 becomes separated from the rest of the flow (for example from the gaseous phase). This separation may be said to be centrifugal separation.

As shown by the arrow 92, the separated oil flow 92 in the Figure 6 embodiment passes from a radially inner to a radially outer side of the platform 25. The oil may thus be removed from the internal flow 90. The oil may pass into the working flow 99. The oil may pass (for example flow and/or seep) through a gap in the platform 25. The gap may be between neighbouring platforms 25 of neighbouring rotor blades 20. The oil may, for example, pass through an imperfect seal between neighbouring rotor blades 25. Additionally or alternatively, the separated oil 92 may pass through a dedicated hole or opening in the platform 25. Such a dedicated hole 28 is shown by the dotted lines in Figure 6. A dedicated opening, where present, may be formed in the platform 25 of a rotor blade 20, or between the platforms 25 of neighbouring rotor blades 20.

The rest of the internal flow 94, which is not separated in the shank passage 50 and which is intended to have a lower liquid (for example oil) percentage than the internal flow 90 entering the shank passage 50 at the upstream side of the rotor stage 10, passes through the rest of the shank passage 50 and out to the downstream side of the rotor stage 10. This remaining internal flow 94 passes through the shank flow opening(s) 45 in the sealing plate 40 to the downstream side of the rotor stage 10, as indicated by arrow 96. The remaining internal flow 96 may be used in a variety of applications downstream of the rotor stage 10, for example it may be used as one or more of a sealing flow, a cooling flow, and a ventilation flow.

The remaining internal flow 94, 95, 96 may take a tortuous flow path before it exits 96 through the shank flow opening(s) 45. This may be achieved by offsetting the shank flow opening(s) 45 from the shank passage 50. In the Figure 6 embodiment, the shank flow opening(s) 45 are radially offset from the shank passage 50, specifically at a radially inner position in relation to the shank passage 50. This creates the tortuous flow path indicated by arrows 94, 95, and 96. According to the Figure 6 embodiment, the remaining internal flow 94 passes from a substantially axial direction 94, to a substantially radially (inner) direction 95, then back to a substantially axial direction 96 to pass through the shank flow opening(s) 45. A tortuous flow path may assist in the separation of the oil from the internal flow in the shank passage 50, for example by reducing the axial velocity of the flow through the shank passage 50 and/or increasing the flow path of the internal flow before it exits through the shank flow opening(s) 45, thereby increasing the amount of time that the internal flow experiences the centripetal separation. A tortuous flow path may be achieved by arrangements other than that shown in Figure 6. For example, a tortuous flow path could be created by circumferentially offsetting the shank flow opening(s) 45 from the shank passage 50.

In some embodiments, a portion of the internal flow 90 entering the shank passage 50 may be used as internal blade cooling flow, for example a cooling feed passage may be provided from the shank passage 50 to provide blade cooling flow to aerofoil cooling passages inside the aerofoil portion 27 of the rotor blade 20. In such embodiments, the cooling feed passage may be arranged (for example located) so as to minimize the proportion of liquid (for example oil) in the internal flow 90 that could enter the aerofoil cooling passages inside the aerofoil portion 27.

In some embodiments, such as that shown in Figures 3 and 6, aerofoil cooling passages 62 in the rotor stage 10 may be provided with internal blade cooling flow that is not bled from the shank passage 50. As shown best in Figure 3, in this embodiment, a separate cooling flow supply passage 60 (which may be referred to as a bucket groove 60) is provided to supply internal blade cooling flow 80 to each blade. There may be one cooling flow supply passage per blade. This internal blade cooling flow 80 may also be said to be part of the secondary air system flow, or in the internal flow. For example, the internal blade cooling flow may have previously passed through an upstream rotor stage in a similar manner to the internal flow 90 passing through the rotor stage 10 in the Figures 3 and 6 embodiments.

In the Figure 3 embodiment, the internal blade cooling flow 80 passes into the root, or attachment portion 21, of the rotor blade 20. In particular, the rotor blade 20 has a cooling flow inlet 61 formed on a radially inner surface of the attachment portion 21, through which cooling flow 80 from the cooling flow supply passage 60 enters the blade 20. The internal blade cooling flow 80 then passes radially outwardly through the shank 23 and platform 25, and into at least one internal flow passage 62 inside the aerofoil portion 27. The internal flow passage 62 may have any suitable shape. In the Figure 3 embodiment, only a radially inner part of the internal flow passage 62 is shown. The full internal flow passage 62 could, for example, be of a serpentine, or 's', shape, with a series of radial passages, joined by bends, directing the internal blade cooling flow 82 alternately radially inwardly and radially outwardly. Other embodiments may, for example, have more than one internal flow passage 62, each having its own cooling flow inlet 61 from the cooling flow supply passage 60.

In the Figure 3 embodiment, the downstream end of the cooling flow supply passage 60 is blocked by an extension, or boss, 42 on the rear (i.e. the upstream side, when installed) of the sealing plate 42. This means that substantially all of the flow (for example air) 80 that enters the cooling flow supply passage 60 is fed into the cooling flow inlet 61, and subsequently through the internal flow passage 62. As such, substantially none of the flow 80 that enters the cooling flow supply passage 60 passes through to the downstream side of the rotor stage 10. This means that all, or substantially all, of the internal, or SAS, flow that passes through the rotor stage 10 to the downstream side of the rotor stage 10 is that which has passed through the shank passage 50, and has thus had liquid (such as oil) separated therefrom.

The sealing plate 40 may have an alternative form to that shown in Figures 3 to 6. For example, sealing plate 40 may not comprise a boss 42. Instead, the upstream surface (when installed) of the sealing plate 40 may be substantially flat. In such an embodiment, the or each shank flow opening 45 in the sealing plate 40 may be arranged to be at substantially the same (or an overlapping) radius as the shank flow passage 50, if required, to allow the internal flow 90 to pass to the downstream side of the rotor stage 10. Any other suitable arrangement of sealing plate 40 may be used according to the invention.

It will be appreciated that many designs and/or arrangements of rotor stage 10 and components/parts thereof other than those shown in Figures 3 to 6 and not explicitly described herein fall within the scope of the invention. Furthermore, any feature described and/or claimed herein may be combined with any other compatible feature described in relation to the same or another embodiment.

## Claims

1. A rotor stage (10) for a gas turbine engine comprising:
a rotor disc (30) having a plurality of radially extending disc posts (32);
a plurality of rotor blades (20), each rotor blade comprising:
an attachment portion (21) configured to engage with circumferentially neighbouring disc posts to attach the rotor blade to the rotor disc;
a platform (25) from which an aerofoil (27) extends; and
a shank (23) extending from the attachment portion to the platform, wherein:
the rotor stage further comprises a sealing plate (40) positioned radially inward of the platform and axially downstream of the disc posts and attachment portion, wherein:
the sealing plate comprises at least one shank flow opening (45) **characterised in that** : said at least one shank flow opening is located radially inboard and axially downstream of a shank passage (50) formed by the shanks of two neighbouring rotor blades, a radially outer surface (36) of a disc post, and radially inner surfaces (26) of the respective platforms of the two neighbouring blades, the shank flow opening allowing internal flow (90) to pass through the shank passage and the sealing plate to a downstream side of the rotor stage via a tortuous flow path between the shank passage and the shank flow opening such that, in use, any oil passing through the shank passage is centrifuged towards the platforms and thereby separated from the rest of the internal flow.

2. A rotor stage according to claim 1, wherein the axis of the or each shank flow opening is substantially aligned with the axial direction of the rotor stage.

3. A rotor stage according to claim 1 or claim 2, wherein the tortuous flow path turns from a substantially axial direction (94) in the shank passage, to a substantially radial direction (95) between the shank passage and the shank flow opening, and back to a substantially axial direction (96) to pass through the shank flow opening.

4. A rotor stage according to any one of the preceding claims, wherein the sealing plate comprises a plurality of shank flow openings, each shank flow opening being configured to allow flow from one or more shank passages to pass therethrough.

5. A rotor stage according to any one of the preceding claims, wherein the sealing plate comprises at least as many shank flow openings as the number of disc blades in the rotor stage.

6. A rotor stage according to any one of the preceding claims, wherein the sealing plate is a circumferential sealing plate that extends circumferentially at the downstream side of the rotor stage.

7. A rotor stage according to any one of the preceding claims, wherein the sealing plate comprises a plurality of sealing plate segments.

8. A rotor stage according to any one of the preceding claims, wherein the one or more shank flow opening or openings are the only openings provided in the sealing plate, such that the only flow that passes through the sealing plate is from the shank passage.

9. A rotor stage according to any one of the preceding claims, further comprising a platform opening (28) provided in the platform of a rotor blade and/or between platforms of adjacent rotor blades, the platform opening being configured to allow, in use, oil (92) to pass therethrough into a working gas of the gas turbine engine.

10. A rotor stage according to claim 9, wherein the number of platform openings is the same as the number of rotor blades.

11. A rotor stage according to any one of the preceding claims, wherein:
each rotor blade further comprises a cooling flow inlet (61) formed on a radially inner surface of the attachment portion and configured to allow cooling flow (80) to enter into the blade;
a cooling flow supply passage (60) is formed between the radially inner surface of the attachment portion and the rotor disc; and
the downstream end of the cooling flow supply passage is blocked by the sealing plate (42), such that, in use, substantially all of the fluid that passes through the cooling flow supply passage enters the cooling flow inlet.

12. A method of separating oil (92) from an internal flow (90) through a rotor stage of a gas turbine engine, the rotor stage comprising:
a rotor disc (30) having a plurality of radially extending disc posts (32); and
a plurality of rotor blades (20), each rotor blade comprising: an attachment portion (21) configured to engage with circumferentially neighbouring disc posts to attach the rotor blade to the rotor disc; a platform (25) from which an aerofoil (27) extends; and a shank (23) extending from the attachment portion to the platform,
the method comprising:
passing the internal flow through a shank passage (50) formed by the shanks of two neighbouring rotor blades, a radially outer surface of a disc post, and radially inner surfaces of the respective platforms of the two neighbouring blades and out through a shank flow opening (45) in a sealing plate (40) positioned radially inward of the platform and axially downstream of the disc posts and attachment portion; and
rotating the rotor stage so as to separate the oil from the rest of the internal flow through centripetal action within the shank passage.

13. A method of separating oil from an internal flow according to claim 12, further comprising passing the separated oil through gaps in the platform or between neighbouring platforms into a working fluid of the gas turbine engine.

14. A method of separating oil from an internal flow according to claim 12 or claim 13, wherein the internal flow passes out (96) through the or each shank flow opening in a direction substantially aligned with the axial direction of the rotor stage.

15. A method of separating oil from an internal flow according to any one of claims 12 to 14, further comprising passing the internal flow from which the oil has been separated out of the rotor stage through a tortuous path.

## Patentansprüche

1. Rotorstufe (10) für einen Gasturbinenmotor, umfassend:
eine Rotorscheibe (30) mit einer Mehrzahl sich radial erstreckender Scheibenbolzen (32);
eine Mehrzahl von Rotorblättern (20), wobei jedes Rotorblatt folgendes umfasst:
einen Befestigungsabschnitt (21), der so konfiguriert ist, dass er mit umfänglich benachbarten Scheibenbolzen eingreift, um das Rotorblatt an der Rotorscheibe anzubringen;
eine Plattform (25), von der sich ein Flügelprofil (27) erstreckt; und
einen Schaft (23), der sich von dem Befestigungsabschnitt zu der Plattform erstreckt;
wobei:
die Rotorstufe ferner eine Dichtungsplatte (40) umfasst, die radial einwärts der Plattform und axial stromabwärts der Scheibenbolzen und des Befestigungsabschnitts positioniert ist, wobei:
die Dichtungsplatte mindestens eine Schaftströmungsöffnung (45) umfasst, **dadurch gekennzeichnet, dass** die mindestens eine Schaftströmungsöffnung radial einwärts und axial stromabwärts eines Schaftdurchgangs (50) angeordnet ist, der durch die Schäfte zweier benachbarter Rotorblätter gebildet wird, eine radial äußere Oberfläche (36) eines Scheibenbolzens und radial innere Oberflächen (26) der entsprechenden Plattformen der beiden benachbarten Blätter, wobei es die Schaftströmungsöffnung ermöglicht, dass innere Strömung (90) über einen gekrümmten Strömungspfad zwischen dem Schaftdurchgang und der Schaftströmungsöffnung durch den Schaftdurchgang und die Dichtungsplatte zu einer stromabwärts liegenden Seite der Rotorstufe tritt, so dass im Einsatz jegliches durch den Schaftdurchgang tretendes Öl in Richtung der Plattformen zentrifugiert und dadurch vom Rest des internen Stroms abgeschieden wird.

2. Rotorstufe nach Anspruch 1, wobei die Achse der oder jeder Schaftströmungsöffnung im Wesentlichen mit der axialen Richtung der Rotorstufe ausgerichtet ist.

3. Rotorstufe nach einem der Ansprüche 1 oder 2, wobei der gekrümmte Strömungspfad eine Richtungsänderung aus einer im Wesentlichen axialen Richtung (94) in dem Schaftdurchgang in eine im Wesentlichen radiale Richtung (95) zwischen dem Schaftdurchgang und der Schaftströmungsöffnung und zurück in eine im Wesentlichen axiale Richtung (96) vollzieht, um durch die Schaftströmungsöffnung zu verlaufen.

4. Rotorstufe nach einem der vorstehenden Ansprüche, wobei die Dichtungsplatte eine Mehrzahl von Schaftströmungsöffnungen umfasst, wobei jede Schaftströmungsöffnung so konfiguriert ist, dass sie eine Strömung von einer oder mehreren Schaftdurchgängen dort hindurch ermöglicht.

5. Rotorstufe nach einem der vorstehenden Ansprüche, wobei die Dichtungsplatte mindestens so viele Schaftströmungsöffnungen wie die Anzahl an Scheibenblättern in der Rotorstufe umfasst.

6. Rotorstufe nach einem der vorstehenden Ansprüche, wobei die Dichtungsplatte eine umfängliche Dichtungsplatte ist, die sich umfänglich auf der stromabwärts liegenden Seite der Rotorstufe erstreckt.

7. Rotorstufe nach einem der vorstehenden Ansprüche, wobei die Dichtungsplatte eine Mehrzahl von Dichtungsplattensegmenten umfasst.

8. Rotorstufe nach einem der vorstehenden Ansprüche, wobei die eine Schaftströmungsöffnung oder die mehreren Schaftströmungsöffnungen die einzigen Öffnungen sind, die in der Dichtungsplatte vorgesehen sind, so dass nur die Strömung von dem Schaftdurchgang durch die Dichtungsplatte tritt.

9. Rotorstufe nach einem der vorstehenden Ansprüche, wobei diese ferner eine Plattformöffnung (28) umfasst, die in der Plattform eines Rotorblatts und/oder zwischen Plattformen benachbarter Rotorblätter vorgesehen ist, wobei die Plattformöffnung so konfiguriert ist, dass sie es im Einsatz ermöglicht, dass Öl (92) dort hindurch in ein Arbeitsgas des Gasturbinenmotors verlaufen kann.

10. Rotorstufe nach Anspruch 9, wobei die Anzahl der Plattformöffnungen der Anzahl an Rotorblättern entspricht.

11. Rotorstufe nach einem der vorstehenden Ansprüche, wobei:
jedes Rotorblatt ferner einen Kühlstromeinlass (61) umfasst, der an einer radial inneren Oberfläche des Befestigungsabschnitts ausgebildet und so konfiguriert ist, dass er den Eintritt eines Kühlstroms (80) in das Blatt ermöglicht;
ein Kühlstromzufuhrkanal (60) zwischen der radial inneren Oberfläche des Befestigungsabschnitts und der Rotorscheibe ausgebildet ist; und
das stromabwärts liegende Ende des Kühlstromzufuhrkanals durch die Dichtungsplatte (42) blockiert ist, so dass im Einsatz im Wesentlichen das ganze Fluid, das durch den Kühlstromzufuhrkanal verläuft, in den Kühlstromeinlass eintritt.

12. Verfahren zum Abscheiden von Öl (92) aus einem inneren Strom (90) durch eine Rotorstufe eines Gasturbinenmotors, wobei die Rotorstufe folgendes umfasst:
eine Rotorscheibe (30) mit einer Mehrzahl sich radial erstreckender Scheibenbolzen (32); und
eine Mehrzahl von Rotorblättern (20), wobei jedes Rotorblatt folgendes umfasst:
einen Befestigungsabschnitt (21), der so konfiguriert ist, dass er mit umfänglich benachbarten Scheibenbolzen eingreift, um das Rotorblatt an der Rotorscheibe anzubringen; eine Plattform (25), von der sich ein Flügelprofil (27) erstreckt; und einen Schaft (23), der sich von dem Befestigungsabschnitt zu der Plattform erstreckt;
wobei das Verfahren folgendes umfasst:
das Führen des inneren Stroms durch einen Schaftdurchgang (50), der ausgebildet ist durch die Schäfte zweier benachbarter Rotorblätter, eine radial äußere Oberfläche eines Scheibenbolzens und radial innere Oberflächen der entsprechenden Plattformen der beiden benachbarten Blätter, und aus einer Schaftströmungsöffnung (45) in einer Dichtungsplatte (40) hinaus, die radial einwärts der Plattform und axial stromabwärts der Scheibenbolzen und des Befestigungsabschnitts positioniert ist; und
Drehen der Rotorstufe, so das Öl vom Rest des internen Stroms durch Zentripetalwirkung in dem Schaftdurchgang abgeschieden wird.

13. Verfahren zum Abscheiden von Öl aus einem inneren Strom nach Anspruch 12, ferner umfassend das Führen des abgeschiedenen Öls durch Lücken in der Plattform oder zwischen benachbarten Plattformen in ein Arbeitsfluid des Gasturbinenmotors.

14. Verfahren zum Abscheiden von Öl aus einem inneren Strom nach Anspruch 12 oder 13, wobei der innere Strom aus der oder jeder Schaftströmungsöffnung in eine Richtung austritt (96), die im Wesentlichen mit der axialen Richtung der Rotorstufe ausgerichtet ist.

15. Verfahren zum Abscheiden von Öl aus einem inneren Strom nach einem der Ansprüche 12 bis 14, ferner umfassend das Führen des inneren Stroms, aus dem das Öl aus der Rotorstufe abgeschieden worden ist, durch einen gekrümmten Pfad.

## Revendications

1. Étage (10) de rotor pour un moteur à turbine à gaz comprenant :
un disque (30) de rotor ayant une pluralité de montants (32) de disque s'étendant radialement ;
une pluralité de pales (20) de rotor, chaque pale de rotor comprenant :
une partie de fixation (21) conçue pour venir en prise avec des montants de disque circonférentiellement voisins pour fixer la pale de rotor au disque de rotor ;
une plate-forme (25) à partir de laquelle s'étend un profil aérodynamique (27) ; et
une tige (23) s'étendant de la partie de fixation à la plate-forme, dans lequel :
l'étage de rotor comprend en outre une plaque d'étanchéité (40) positionnée radialement vers l'intérieur de la plate-forme et axialement en aval des montants de disque et de la partie de fixation, dans lequel :
la plaque d'étanchéité comprend au moins une ouverture (45) de flux de tige, **caractérisé en ce que** : ladite au moins une ouverture de flux de tige est située radialement vers l'intérieur et axialement en aval d'un passage (50) de tige formé par les tiges des deux pales de rotor voisines, une surface (36) radialement externe d'un montant de disque, et des surfaces (26) radialement internes des plates-formes respectives des deux pales voisines, l'ouverture de flux de tige permettant à un flux interne (90) de passer à travers le passage de tige et la plaque d'étanchéité vers un côté en aval de l'étage de rotor par l'intermédiaire d'un trajet de flux tortueux entre le passage de tige et l'ouverture de flux de tige de sorte que, en utilisation, l'huile passant à travers le passage de tige soit centrifugée vers les plates-formes et ainsi séparée du reste du flux interne.

2. Étage de rotor selon la revendication 1, dans lequel l'axe de la ou de chaque ouverture de flux de tige est sensiblement aligné avec la direction axiale de l'étage de rotor.

3. Étage de rotor selon la revendication 1 ou 2, dans lequel le trajet de flux tortueux tourne d'une direction sensiblement axiale (94) dans le passage de tige, vers une direction sensiblement radiale (95) entre le passage de tige et l'ouverture de flux de tige, et de nouveau vers une direction sensiblement axiale (96) pour passer à travers l'ouverture de flux de tige.

4. Étage de rotor selon l'une quelconque des revendications précédentes, dans lequel la plaque d'étanchéité comprend une pluralité d'ouvertures de flux de tige, chaque ouverture de flux de tige étant conçue pour permettre au flux provenant d'un ou de plusieurs passages de tige de passer au travers.

5. Étage de rotor selon l'une quelconque des revendications précédentes, dans lequel la plaque d'étanchéité comprend au moins autant d'ouvertures de flux de tige que le nombre de pales de disques dans l'étage de rotor.

6. Étage de rotor selon l'une quelconque des revendications précédentes, dans lequel la plaque d'étanchéité est une plaque d'étanchéité circonférentielle qui s'étend circonférentiellement sur le côté aval de l'étage de rotor.

7. Étage de rotor selon l'une quelconque des revendications précédentes, dans lequel la plaque d'étanchéité comprend une pluralité de segments de plaque d'étanchéité.

8. Étage de rotor selon l'une quelconque des revendications précédentes, dans lequel l'ouverture ou les ouvertures de flux de tige sont les seules ouvertures pratiquées dans la plaque d'étanchéité, de sorte que le seul flux qui passe à travers la plaque d'étanchéité provienne du passage de tige.

9. Étage de rotor selon l'une quelconque des revendications précédentes, comprenant en outre une ouverture de plate-forme (28) pratiquée dans la plate-forme d'une pale de rotor et/ou entre les plates-formes de pales de rotor adjacentes, l'ouverture de plate-forme étant conçue pour permettre, en utilisation, à l'huile (92) de passer à travers dans un gaz de travail du moteur à turbine à gaz.

10. Étage de rotor selon la revendication 9, dans lequel le nombre d'ouvertures de plate-forme est identique au nombre de pales de rotor.

11. Étage de rotor selon l'une quelconque des revendications précédentes, dans lequel :
chaque pale de rotor comprend en outre une entrée (61) de flux de refroidissement formée sur une surface radialement interne de la partie de fixation et conçue pour permettre au flux de refroidissement (80) d'entrer dans la pale ;
un passage d'alimentation (60) en flux de refroidissement est formé entre la surface radialement interne de la partie de fixation et le disque de rotor ; et
l'extrémité aval du passage d'alimentation en flux de refroidissement est bloquée par la plaque d'étanchéité (42), de sorte que, en utilisation, sensiblement tout le fluide qui passe à travers le passage d'alimentation en flux de refroidissement entre dans l'entrée de flux de refroidissement.

12. Procédé de séparation d'huile (92) d'un flux interne (90) par l'intermédiaire d'un étage de rotor d'un moteur à turbine à gaz, l'étage de rotor comprenant :
un disque (30) de rotor ayant une pluralité de montants (32) de disque s'étendant radialement ; et
une pluralité de pales de rotor (20), chaque pale de rotor comprenant : une partie de fixation (21) conçue pour venir en prise avec des montants de disque circonférentiellement voisins pour fixer la lame de rotor au disque de rotor ; une plate-forme (25) à partir de laquelle s'étend un profil aérodynamique (27) ; et une tige (23) s'étendant de la partie de fixation à la plate-forme,
le procédé comprenant les opérations consistant à :
faire passer le flux interne à travers un passage (50) de tige formé par les tiges des deux pales de rotor voisines, une surface radialement externe d'un montant de disque, et des surfaces radialement internes des plates-formes respectives des deux pales voisines et vers l'extérieur à travers une ouverture (45) de flux de tige dans une plaque d'étanchéité (40) positionnée radialement vers l'intérieur de la plate-forme et axialement en aval des montants de disque et de la partie de fixation ; et
faire tourner l'étage de rotor de sorte à séparer l'huile du reste du flux interne par une action centripète dans le passage de tige.

13. Procédé de séparation d'huile d'un flux interne selon la revendication 12, comprenant en outre l'étape consistant à faire passer l'huile séparée à travers des espaces dans la plate-forme ou entre des plates-formes voisines dans un fluide de travail du moteur à turbine à gaz.

14. Procédé de séparation d'huile d'un flux interne selon la revendication 12 ou 13, dans lequel le flux interne sort (96) à travers la ou chaque ouverture de flux de tige dans une direction sensiblement alignée avec la direction axiale de l'étage de rotor.

15. Procédé de séparation d'huile d'un flux interne selon l'une quelconque des revendications 12 à 14, comprenant en outre l'étape consistant à faire passer le flux interne duquel l'huile a été séparée hors de l'étage de rotor à travers un chemin tortueux.
